# EUROPEAN PATENT APPLICATION

(11) **EP 2 117 135 A1**
(43) Date of publication of application: **11.11.2009**
(21) Application number: 07851058.3
(22) Date of filing: 21.12.2007
(51) Int. Cl.: H04B 7/26, H04Q 7/36

(54) **BASE STATION DEVICE, USER DEVICE, AND METHOD USED IN MOBILE COMMUNICATION SYSTEM**

(30) Priority: 09.01.2007 JP 2007001865
(71) Applicant: NTT DoCoMo, Inc., Chiyoda-ku Tokyo 100-6150 (JP)
(72) Inventor: IWAMURA, Mikio, Chiyoda-ku Tokyo 100-6150 (JP); NAKAMURA, Takehiro, Chiyoda-ku Tokyo 100-6150 (JP); KATO, Yasuhiro, Chiyoda-ku Tokyo 100-6150 (JP); SHIMAZU, Yoshitsugu, Chiyoda-ku Tokyo 100-6150 (JP); MOTEGI, Masayuki, Chiyoda-ku Tokyo 100-6150 (JP)
(74) Representative: HOFFMANN EITLE
(86) International application number: PCT/JP2007/074706
(87) International publication number: WO 2008/084662

(57) **Abstract**

A disclosed base station apparatus to be used in a mobile communication system includes a report signal receiving unit receiving a report signal from one or more user equipment terminals, a radio parameter adjustment unit adjusting radio parameters based on an analysis result of each report signal, a designation unit designating a report condition to be used for each user equipment terminal to determine whether to transmit the report signal and content to be reported in the report signal, and a report unit reporting the report condition and the content to be reported to the one or more user equipment terminals. Further, in the base station apparatus, the report condition is satisfied when a transmission source of a downlink reference signal is a specific cell, and the content to be reported includes a received quality value of the downlink reference signal.

## Description

### TECHNICAL FIELD

The present invention generally relates to a base station apparatus, a user equipment terminal, and a method used in a mobile communication system.

### BACKGROUND ART

In a mobile communication network, the service area is constituted by many cells adjoining each other and a user equipment (UE) (hereinafter may be referred to as a user equipment terminal) is capable of maintaining communication by performing the handover operation between the cells. The communication environment of a service area may vary depending on geographic conditions, buildings, and amount of traffic flow. Therefore, it is preferable that the cell and the base station be deployed (installed) adequately in accordance with the changes. In a typical conventional method of installing a new base station or adjusting necessary parameters of an already-installed base station, first, in a general case, the position to be installed and the parameters to be set of the base station are considered in an office using a dedicated cell design tool (or a simulation tool), a link budget tool or the like. Then, in the next step, a pilot signal is actually transmitted from, for example, where a base station is to be newly installed (hereinafter referred to as "a new base station to be installed") so that the transmitted pilot signal is received by a measurement vehicle running in an area to be covered by the new base station to be installed. By doing this, the received quality of the pilot signal is measured across the area and as a result, the actual radio wave propagation status of the area is determined. Based on the data collected by doing this way, the radio parameters of the new base station to be installed (such as a transmission power value, a neighbour cell list, QoS (Quality of Service) parameters, scheduling parameters, RRC parameters and the like) are adjusted and, when necessary, readjusted by performing the same procedure as described above; after that, full-fledged operations can be started. However, the above method of installing a new base station and designing a new cell may not be quite easy enough. Therefore, it is not easy to adequately determine the parameters of a new base station and cells thereof in accordance with the actual communication environment.

To resolve the problem, there has been proposed a technical concept called plug and play (PnP) to automatically execute the installation procedure for the new base station to be installed. However, it may be necessary to wait for further research and development. The PnP technique is described in, for example, Non Patent Document 1.

Non Patent Document 1: 3GPP, R2-061929, June 2006

### DISCLOSURE OF INVENTION

### PROBLEMS TO BE SOLVED BY THE INVENTION

In a conventional mobile communication system, when the received quality of the downlink reference signal from the own cell and/or an other cell satisfies a predetermined condition, the user equipment terminal transmits a report called a measurement report (MR) to the base station of the own cell (serving cell) and the transmission of the measurement report is used as a trigger to issue a handover command. This measurement report may be thought to be applied to the measurement of the radio wave propagation status, the measurement being necessary for setting the radio parameters of the new base station to be installed.

However, unfortunately, the measurement report (MR) provided for the purpose of the handover is transmitted to only the operating base station (cell) in which the radio parameters thereof have been already optimized. Further, the base station to be reported in the measurement report (MR) is limited to a surrounding base station providing sufficient received quality as the base station for the handover destination. Originally, the purpose of the measurement report (MR) is to report the status of a surrounding base station as a candidate for the handover destination to the base station currently connected to the user equipment terminal. From this point of view, since the user equipment terminal is unable to keep the connection with the new base station to be installed, it may not be appropriate to modify the measurement report (MR) so as to include data of the new base station to be installed as a target base station to be reported in the measurement report (MR). Therefore, appropriate radio parameters that are based on the measurement result of the radio wave propagation status and that are necessary for the installation of the new base station to be installed may not be obtained by simply or directly applying the above measurement report (MR) alone.

An object of the present invention is to provide a base station apparatus, a user equipment terminal, and a method that are capable of easily measuring the radio wave propagation status in a specific area in order to obtain appropriate radio parameters of the new base station to be installed and an already-installed base station.

### MEANS FOR SOLVING THE PROBLEMS

According to an aspect of the present invention, there is provided a base station apparatus to be used in a mobile communication system. The base station apparatus includes a report signal receiving unit receiving a report signal from one or more user equipment terminals, a radio parameter adjustment unit adjusting radio parameters based on an analysis result of each report signal, a designation unit designating a report condition to be used for each user equipment terminal to determine whether to transmit the report signal and content to be reported in the report signal, and a report unit reporting the report condition and the content to be reported to one or more user equipment terminals. Further in the base station apparatus, the report condition is satisfied when a transmission source of a downlink reference signal is a specific cell, and the content to be reported includes a received quality value of the downlink reference signal.

### ADVANTAGEOUS EFFECT OF THE INVENTION

According to an embodiment of the present invention, it may become possible to easily measure the radio wave propagation status in a specific area in order to obtain appropriate radio parameters of the new base station to be installed and an already-installed base station.

### BRIEF DESCRIPTION OF THE DRAWINGS

FIG. 1 is a schematic block diagram of a base station apparatus according to an embodiment of the present invention;
FIG. 2 is a schematic block diagram of a user equipment terminal according to an embodiment of the present invention;
FIG. 3 is a sequence diagram showing an exemplary operation according to an embodiment of the present invention;
FIG. 4 is a drawing showing a relationship between a received signal quality value varying over time and several threshold values;
FIG. 5 is a drawing showing a case where the next report is transmitted when a different value between this timing and the previous timing of the report transmission is more than a predetemrined value;
FIG. 6 is a flowchart showing exemaplary operations of the user equipment terminal according to an embodiment of the present invention;
FIG. 7 is a drawing showing an operation of reporting measured data after the user equipment terminal returns to a service area from a non-service area; and
FIG. 8 is a flowchart showing a process for improving an incompletion rate.

### EXPLANATION OF REFERENCES

- 11:: RADIO WAVE RECEIVE SECTION (RxRF)
- 12:: RRC (RADIO RESOURCE CONTROL) PROCESSING SECTION
- 13:: ANALYSIS SECTION
- 14:: NETWORK INTERFACE (NW-I/F)
- 15:: PARAMETER ADJUSTMENT SECTION
- 16:: MONITORING SECTION
- 17:: DETERMINATION SECTION
- 18:: RADIO WAVE TRANSMISSION SECTION (TxRF)
- 21:: RADIO WAVE RECEIVE SECTION (RxRF)
- 22:: RRC PROCESSING SECTION
- 23:: MEASUREMENT SECTION
- 24:: MEMORY
- 25:: RADIO WAVE TRANSMISSION SECTION (TxRF)

### BEST MODE FOR CARRYING OUT THE INVENTION

According to an embodiment of the present invention, the radio parameters of a base station apparatus (hereinafter simplified as base station) are adjusted based on an analysis result of the report content of the report signals received from one or more user equipment terminals (UE). The report content may be analyzed by the base station or a node which is higher in order than the base station (such as MME/UPE and the like). A report condition to be used for determining whether each user equipment terminal should transmit the report signal and content to be reported in the report signal are reported to the user equipment terminal on as as-needed basis. When the transmission source of the downlink signal is a specific cell, the report condition and the report content are determined so that a received quality value of the downlink reference signal from the specific cell is transmitted to the base station.

The specific cell may be a cell designated by the base station.

According to an embodiment of the present invention, since many user equipment terminals located in various areas may perform measurements of the designated cell and report the results of the measurements to the base station, it may be no longer necessary to use (drive) a measurement vehicle to measure the radio wave propagation status throughout the specific area.

According to an embodiment of the present invention, the report condition may be satisfied when the relationship between the received quality value of the downlink reference signal and at least one of plural threshold values changes. Further, the report condition may be satisfied when the received quality value of the downlink reference signal has changed more than a prescribed value. It is preferable to determine an event (i.e., a trigger to start the measurements) as described above because the data of an area where the receiving signal quality value is more likely to change can be more effectively collected, the area being important from the viewpoint of the analysis of the radio wave propagation status.

The report signal may be received periodically. It may be preferable from the viewpoint of analyzing the change of the radio wave propagation status over time.

Further, the report condition may be satisfied when a positional relationship between the base station and the user equipment terminal reaches a predetermined positional relationship. It is preferable to use such an event because it may become possible to analyze the radio wave propagation status from the viewpoint of the change of the positions and the change of the distance between the base station and the user equipment terminal.

Further, the received signal quality value may be a value relative to a received signal quality value of a signal from another base station. Otherwise, an absolute value independent of any other received signal quality value may be used. The use of the relative value may be advantageous from the viewpoint of reducing the number of bits of the data to be reported to the base station. On the other hand, the use of the absolute value may be advantageous from the viewpoint of capability of directly expressing the strength (level) of the actually received signal.

Further, any one of the report condition and the content to be reported or both (hereinafter may be referred to as event parameter(s)) may be reported as broadcast information or as dedicated control information addressed to a specific user equipment terminal. It may be advantageous to report (broadcast) the parameters as the broadcast information because the measurement data can be collected based on more user equipment terminals (data sources). On the other hand, when, for example, only the measurement data from the user equipment terminals located in a specific place are required to be collected, it is more preferable to report the event parameters as the dedicated control information.

Further, the report condition may be satisfied when the traffic flow is not congested so that the traffic congestion level is not higher than a predetermined level. This setting of the report condition may be preferable from the viewpoint of putting a higher priority on the normal operation of the user equipment terminal so that the primary service can be preferentially provided.

The base station of the specific cell may be a base station (surrounding base station) surrounding the base station having designated the specific cell. This may be advantageous from the viewpoint of adjusting the radio parameters while considering the influence of the other-cell interference.

The report signal may be superimposed onto a signal transmitted when the tracking area is updated, a call is originated, or a terminating call is responded to. By superimposing the report signal at any of the timings, it is advantageous because the user equipment does not have to newly establish the RRC (Radio Resource Control) connection for the purpose of transmitting the report signal alone.

Further, the report condition may be satisfied when a cell is detected during the cell search and when a cell has not been detected for, for example, a predetermined time period during the cell search. Further, the report signal from the user equipment terminal that had once moved out of a service area into a non-service area and has returned to a service area again may include the data that had been provided (measured) before the user equipment terminal moved out of the service area and that have not been reported yet. This may be advantageous from the viewpoint of collecting the data of the boundary area between the cells and the data of the boundary area between the service area and the non-service area because the data of such areas may be important in a cell design process. Further, the report signal may include the positional data and time data when the user equipment terminal moved into a non-service area or a service area.

Further, one or more user equipment terminals may transmit the report signal when the forced termination rate of calls is degraded more than a predetermined level. Further, as described above, not only the new base station to be installed but also the already-installed base station may be the base station of the specific cell to be reported to each user equipment terminal. This is because the measurement data of the radio wave propagation status near such an already-installed base station may be useful for the adjustment of the radio parameters of the base station, and as a result, the forced termination rate may be improved.

Further, the forced termination rate may be based on the number of handover failures, the number of connection failures, or the number of failure due to the degradation of a radio link.

For explanation purposes, the present invention is described through several embodiments. However, such separation of the embodiments of the present invention is not essential to the present invention, and one or more embodiments may be used on an as-needed basis.

### Embodiment 1

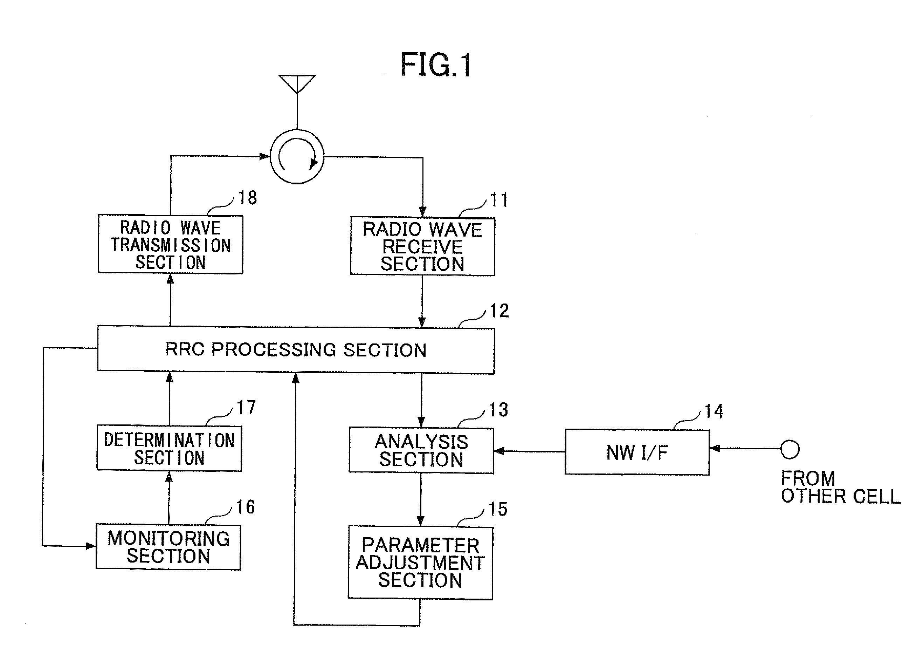

FIG. 1 is a schematic block diagram of a base station according to an embodiment of the present invention. As shown in FIG. 1, the base station includes a radio wave receive section (RxRF) 11, an RRC (Radio Resource Control) processing section 12, an analysis section 13, a network interface (NW-I/F) 14, a parameter adjustment section 15, a monitoring section 16, a determination section 17, and a radio wave transmission section (TxRF) 18.

The radio wave receive section (RxRF) 11 performs processes such as the amplifying, filtering, frequency converting, and analog-to-digital converting processes and the like on the received radio signal received through the antenna and the circulator (or the duplexer) to convert the received radio signal into a baseband digital signal. According to an embodiment of the present invention, the received radio signal (i.e., the report signal) includes a group of measurement data reported from each user equipment terminal.

The RRC (Radio Resource Control) processing section 12 performs processes of the RRC layer such as calling a specific user equipment terminal, establishing/changing/releasing the connection and the like. Further, the RRC processing section 12 controls the operations described with reference to the flowchart below.

The analysis section 13 analyzes the data and the information collected by the user equipment terminal according to an embodiment of the present invention. The data and the information may be not only directly received from each user equipment terminal connected to the base station but also received from another base station through the network interface (NW-I/F) 14.

The parameter adjustment section 15 adjusts the radio parameters in accordance with the analysis result. The radio parameters may include a transmission power value, neighbour cell list data, QoS data, scheduling parameters, RRC parameters and the like.

The monitoring section 16 counts the number of times the call is forcibly terminated so as to calculate the incompletion rate or a forcible termination rate (i.e., failure rate). The cause of the forcible termination of a call may be a handover failure, a connection failure, the degradation of radio link quality or the like.

The determination section 17 determines whether the incompletion rate is degraded by its exceeding a predetermined level and then reports the determination result to the RRC processing section 12. The monitoring section 16 and the determination section 17 particularly relate to a fourth embodiment of the present invention described below.

The radio wave transmission section (TxRF) 18 performs processes such as the digital-to-analog converting, frequency converting, filtering, and amplifying processes and the like on the baseband digital signal to convert the baseband digital signal into a radio transmission signal. The radio transmission signal is transmitted wirelessly through the circulator and the antenna.

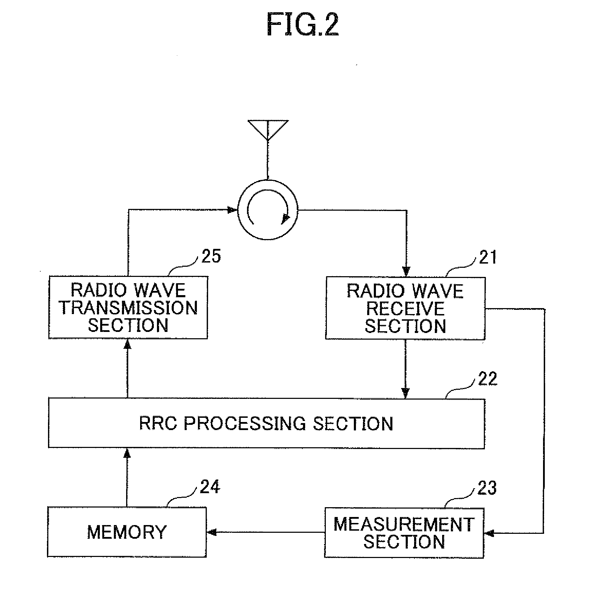

FIG. 2 is a schematic block diagram of user equipment terminal according to an embodiment of the present invention. As shown in FIG. 2, the user equipment terminal includes a radio wave receive section (RxRF) 21, an RRC processing section 22, a measurement section 23, a memory 24, and a radio wave transmission section (TxRF) 25.

The radio wave receive section (RxRF) 21 performs processes such as the amplifying, filtering, frequency converting, and analog-to-digital converting processes and the like on the received radio signal received through the antenna and the circulator (or the duplexer) to convert the received radio signal into a baseband digital signal.

The RRC processing section 22 performs the processes relevant to the processes of the RRC processing section 12 of the base station. Further, the RRC processing section 22 performs the processes according to an embodiment of the present invention described in the exemplary operations below.

The measurement section 23 measures various data useful to analyze the radio wave propagation status. Further, the measurement section 23 may measure the received quality value of the downlink reference signal, positional data and time data of the user equipment terminal and the like at a predetermined cycle. The measurement may be periodically performed every, for example, several hundred milliseconds. The received quality value may be determined based on the measured received signal level, received SIR (Signal to Interference noise Ratio) value, a path loss value or the like. The transmission source of the downlink reference signal may be a new base station to be installed, any already-installed base station, or an already-installed base station suffering a high incompletion rate as described in a fourth embodiment of the present invention below. The reference signal herein is a signal having a pattern known between the transmission side and the reception side and may be referred to as a pilot signal, a known signal, a training signal and the like.

The memory 24 stores measured group of data (hereinafter may be referred to as measurement data group). The measurement data group may be called measurement point(s) and stored as group data with respect to each occurring event. Further, the measurement data group may be deleted after a predetermined time period has elapsed since the measurement data group has been reported to the base station. Further, in a case where the storage capacity of the user equipment terminal is limited, if the data amount stored in the user equipment terminal is remarkably increased, the measurement data group may be deleted after a predetermined time period has elapsed since the measurement data group has been stored even though the measurement data group has not reported to the base station yet. By adequately deleting the measurement data group, the radio resources required to be provided to report the measurement data group to the base station may be reduced.

The radio wave transmission section (TxRF) 25 performs processes such as the digital-to-analog converting, frequency converting, filtering, and amplifying processes and the like on the baseband digital signal including the measurement data group to convert the baseband digital signal into a radio transmission signal (report signal). The radio transmission signal is transmitted wirelessly through the circulator and the antenna.

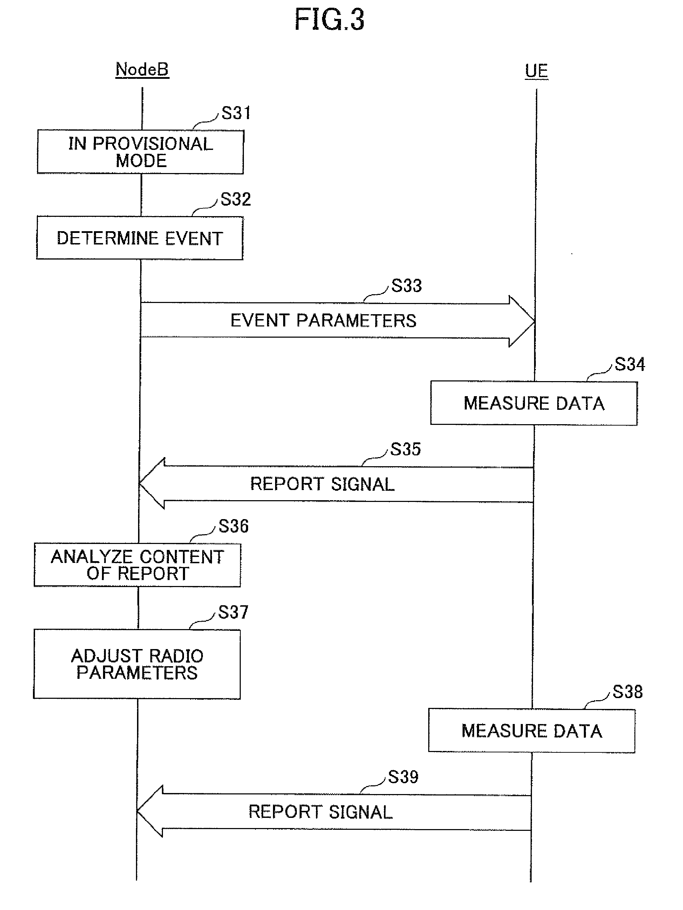

FIG. 3 is a sequence diagram showing exemplary operations according to an embodiment of the present invention. As shown in step S31, the base station (may be referred to as BS, NodeB, or eNB) is in a provisional operation mode. In this case, the base station is the new base station to be installed in a service area and is in the provisional operation mode in which the base station is capable of transmitting the broadcast signal, reference signal and control signal and the like and receiving the report signal and the like but the communication based on a connection established between the base station and the user equipment is not supported. The provisional operation status may be called a preoperational status. The purpose of the operations illustrated in the sequence diagram of FIG. 3 is to obtain the adequate radio parameters of the new base station to be installed so that the status of the base station can be changed from the provisional operation status to an actual operation status.

In step S32, the report condition to be used to determine whether each user equipment terminal should transmit the report signal and the content to be reported in the report signal are determined so that the actual radio wave propagation status can be measured (determined). In other words, an event is determined that triggers the transmission of the report signal from the user equipment terminal. In the following, the report condition to be used to determine the event and the report content to be reported are described. A part or all of the following items maybe adopted in step S32.
(A): The transmission source of the downlink reference signal is the base station of the specific cell. In this case, the specific cell of the base station may be designated by using cell identification information (cell ID) or a scramble code. Further, according to this embodiment of this present invention, the base station of the specific cell is the new base station to be installed. However, according to another embodiment of the present invention, the base station of the specific cell may be any base station of the new base stations to be installed or the already-installed base stations. The base station of the specific cell may be a base station of the serving cell or a base station of a neighbour cell adjacent to the service cell. Further, when the specific cell or the base station of the specific cell is detected or lost, the event may trigger the preparation (measurement) of the various data groups to be reported to the base station.
(B): The relationship between the received signal quality value of the downlink reference signal and a threshold value changes. In this case, as the received signal quality value, any adequate type of data known in this technical field may be used such as the received signal level (strength) like the RSSI (Received Signal Strength Indicator), received SIR, path loss value and the like. Further, as the received signal quality value, a value relative to a received signal quality value of a signal from another base station may be used. The use of the relative value may be preferable from the viewpoint of reducing the number of bits of data to be reported to the base station. Further, as the received signal quality value received from the specific cell, an absolute value may be used which is independent of any other received signal quality value from another base station. The use of the absolute value may be preferable because the absolute value may directly indicate the actual received signal strength (level) from the new base station to be installed or the like.

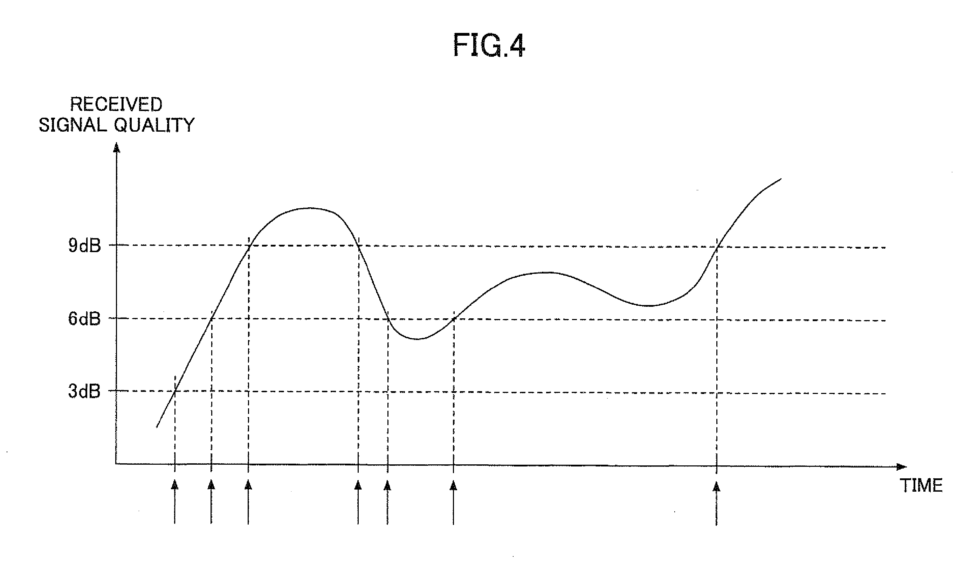

   FIG. 4 shows a relationship between a received signal quality value varying over time and several threshold values. More specifically, FIG. 4 shows a case where the threshold values of 3dB, 6dB, and 9dB are provided. However, the number of the threshold values are not limited to this and any number of the threshold values may be provided. Further, when an event occurs where a relationship between the received signal quality value and any of the threshold values changes, the event may act as a trigger to prepare (measure) various measurement data groups to be reported. In the example of FIG. 4, seven (7) such trigger points on the time axis are indicated by arrows. The differences between the threshold values may be the same as shown in FIG. 4 or may be different from one another.
(C): The distance between the user equipment terminal and the base station is increased (or decreased) by a predetermined distance since the last time point when the user equipment terminal transmitted a report signal. As is described, the change of the distance may act as a trigger to transmit the report signal. In this case, for example, the user equipment terminal may be required to include a GPS (Global Positioning System) receiver to locate the position thereof. In any case, more generally, when a predetermined positional relationship between the user equipment terminal and the base station reaches a predetermined positional relationship, various measurement data groups to be reported may be prepared (measured).
(D): The received signal quality value changes more than a predetermined value. The received signal quality value is measured at a predetermined cycle. Therefore, by monitoring the received signal quality value and when an event occurs where the received signal quality value is different from that measured last time by a predetermined value, the event may act as a trigger to transmit the next report signal.

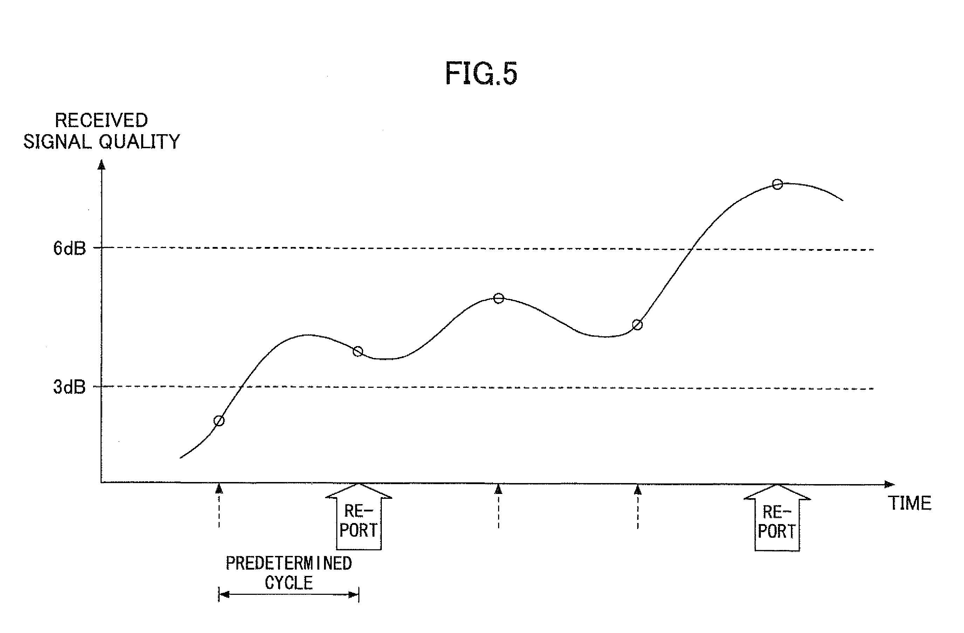

   FIG. 5 shows a case where the next report signal is transmitted when the received signal quality value having been measured at a predetermined cycle differs from the received signal quality value reported last time by 3dB or more. By setting in this way, it may become possible to transmit only the measurement data group of the time points (or location points) when the received signal quality value changes by more than a predetermined value. When the radio wave propagation status of the area where the new base station to be installed is analyzed, the data of the areas when the received signal quality value changes are much more important than the data of the area where the received signal quality value is relatively unchanged. Therefore, it may be preferable when the report signal is transmitted upon the above event occurring. Further, the method of using the event may be preferable from the viewpoint of reducing radio resources to be used for transmitting the report signal.
(E) Time is reached at a predetermined point. The report signal may be transmitted each time when any of the above events occurs. Especially when the user equipment terminal is in the active mode, the connection between the user equipment terminal and the base station is established. Therefore, the user equipment terminal in the active mode may transmit the report signal in real time. Further, the report signal may be transmitted when a predetermined time period has passed since the last report signal has been transmitted. In other words, the report signal may be transmitted at a predetermined cycle. When it is not necessary to receive a report signal immediately, the report signals may be collectively transmitted when the call is terminated or after the transmission of an uplink data signal is finished. Further, in a case where the base station that receives the report signal is the already-installed base station, it may be determined so that the report signal is transmitted while the traffic congestion level is not higher than a predetermined level. As described in a second embodiment of the present invention below, in a case where the user equipment is in the idle mode (in which the user equipment terminal intermittently monitors a paging channel (PCH) to wait for a terminating call), the report signal may be transmitted upon the establishment of any RRC connection to the user equipment terminal.

According to this embodiment of the present invention, it is the new base station to be installed that independently determines (selects) the content of the event. However, any other node may determine the content of the event. For example, in the already-installed base station as described in the fourth embodiment of the present invention below, any node which is higher in order than the base station (such as an access gateway, MME/UPE or the like), or an operator may determine the content of the event.

Referring back to FIG. 3, in step S33, a parameter indicating the content of the determined (selected) event (i.e., event parameter) is reported to the user equipment terminal. This report may be broadcasted to the unspecified user equipment terminals using broadcast channel (BCH) information or may be transmitted to a specific user equipment terminal using control channel (CCH) information such as L1/L2 control channel information.

In step S34, the user equipment terminal measures various data such as the received quality value of the downlink reference signal from the base station of the specific cell, the position of the user equipment terminal, time and the like in accordance with the content of the event parameter. Some of the measured data may be used for a peripheral cell search and the cell reselection.

In step S35, as a result of a recognition that the report signal is to be transmitted, the user equipment terminal transmits the report signal. Whether the report signal is to be transmitted is determined based on the content of the event parameter. The report signal includes the measurement data group stored in the memory.

In step S36, the base station analyzes the content of the report (data) included in the received report signal transmitted from each user equipment terminal. Any of known various methods in the technical field may be used for the analysis. By using the content of the report from multiple user equipment terminals located in various positions, the radio wave propagation status of the reference signal transmitted from the new base station to be installed is analyzed along with map information of the cell.

In step S37, the radio parameters of the new base station to be installed are adjusted. In step S38, the user equipment terminals perform measurement with respect to the new base station to be installed operating based on the adjusted radio parameters. In step S39, the user equipment terminals transmit the report signals to the new base station to be installed. After that, steps S36 and S37 are repeated so that the content of the reports is analyzed and the radio parameters are adjusted, thereby ultimately optimizing the radio parameters of the new base station to be installed.

As described above, by collecting the report signals from multiple user equipment terminals having received the downlink reference signal from the new base station to be installed, it may become possible to effectively and easily obtain the information necessary to grasp the radio wave propagation status, thereby promptly performing the optimization (adjustment) of the radio parameters of the new base station to be installed.

### Embodiment 2

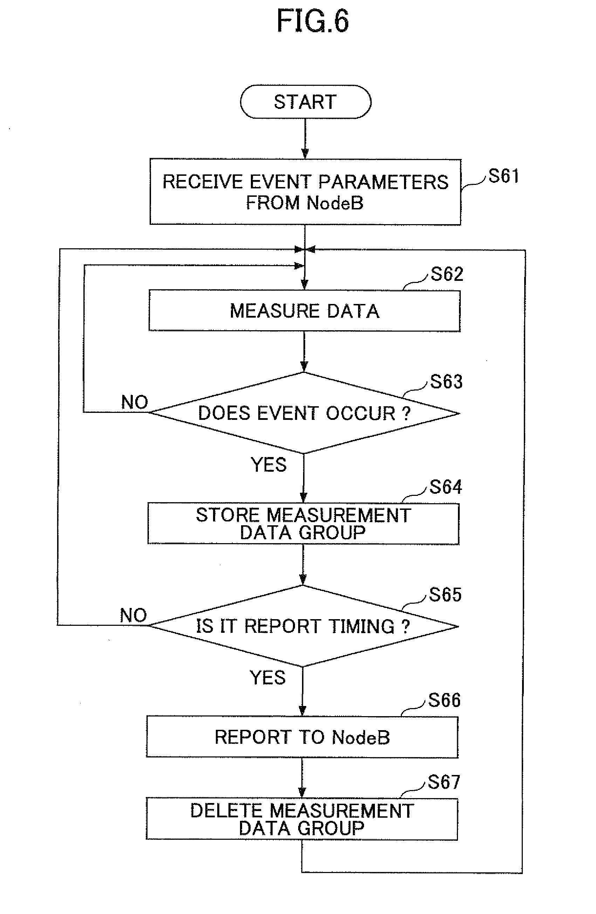

FIG. 6 is a flowchart showing exemplary operations of the user equipment terminal according to an embodiment of the present invention. Although the operations in FIG. 6 may be applicable to the user equipment terminal in both the active mode and the idle mode, herein, for explanation purposes, the user equipment terminal is assumed to be in the idle mode. In the idle mode, as described above, the user equipment terminal intermittently monitors a paging channel (PCH) to wait for a terminating call. Even in the idle mode, the cell search, cell reselection, the update of the tracking area (TA) and the like can be performed.

In step S61, the user equipment terminal receives the event parameter from the base station of the serving cell. The base station may be the new base station to be installed as described above or may be the already-installed base station. In any case, a report is transmitted from the base station of the serving cell to the user equipment terminal, the report indicating that at least both the measurement of the reference signal transmitted from the new base station to be installed or the already-installed base station and the report of the measurement results are required to be performed.

In step S62, the user equipment terminal measures various data the same as those in step S34 in FIG. 3. Generally, the measurement is performed periodically; however, the number of measurements per unit time period performed by the user equipment terminal in the active mode may be the same as or different from that performed by the user equipment terminal in the idle mode. For example, the user equipment terminal in the active mode may perform the measurement once per 200 ms but on the other hand, the user equipment in the idle mode may perform the measurement only once per 1,000 ms.

In step 63 of FIG. 6, the user equipment terminal determines whether the event occurs that is designated by the base station of the serving cell. When determining that the event has not occurred, the process goes back to step S62 to continue the measurement. On the other hand, when determining that the event has occurred, the process goes to step S64.

In step S64, the measured group of data (measurement data group) is associated with the having occurred event and stored in the memory. In other words, the measurement data group and corresponding event are associated with each other and stored in the memory as one group of data.

In step S65, the user equipment terminal determines whether the user equipment terminal should transmit the report signal at this time point. When determining that it is not yet the time to transmit the report signal, the process goes back to step S62. On the other hand, when determining that it is time to transmit the report signal, the process goes to step S66. Further, when determining that it is not yet the time to transmit the report signal, (though it is not explicitly described in the flowchart of FIG. 6,) the process may remain in step S65 until determining that it is time to transmit the report signal. As described above, the user equipment terminal in the active mode may transmit the report signal any time. Therefore, the user equipment terminal in the active mode may transmit the report signal whenever an event occurs or at any other timings. However, on the other hand, the user equipment terminal in the idle mode does not have an established connection with the base station. Therefore, after an event occurs, the user equipment terminal in the idle mode has to wait to transmit the report signal until the RRC connection is established for transmitting the uplink control signal to the base station. It may be technically possible to forcibly establish the RRC connection whenever the event occurs to transmit the report signal alone by using the discontinuous signal reception (or DRX) function of the user equipment terminal which is for saving the battery energy, but it may not be a good idea to use this function to forcibly establish the RRC connection.

On the other hand, the cell search, cell reselection, the update of the tracking area and the like can be performed even from the user equipment terminal in the idle mode. When the service cell of the user equipment terminal is changed due to the movement of the user equipment terminal, the user equipment terminal recognizes a tracking area to which the cell belongs based on the broadcast channel (BCH) information from the base station of the new service cell. When determining that the recognized tracking area is different from that of the source cell (the cell where the user equipment terminal had been located before the movement), the user equipment terminal sends a report to the base station of the new service cell to register the new tracking area to which the user equipment terminal belongs (this report is called a Tracking Area Update (TAU)). Therefore, the measurement data group may be reported when the tracking area update is transmitted to the base station. Further, the RRC connection is established when a call is originated from the user equipment terminal and the user equipment terminal responds to a terminating call. Therefore the measurement data group may be reported in such cases.

In step S66, the user equipment terminal transmits the report signal to the base station. This step S66 corresponds to each of steps S35 and S39 in FIG. 3.

In step S67 of FIG. 6, the measurement data group having been reported is deleted. Further, in such a case where the storage capacity of the user equipment terminal is limited, or the data amount stored in the user equipment terminal is remarkably increased, the measurement data group may be deleted after a predetermined time period has elapsed since, for example, the measurement data group is stored even if the measurement data group has not been reported to the base station yet. By adequately deleting the measurement data group, the radio resources required to report the measurement data group to the base station may be reduced. After that, the process goes back to step S62 to repeat the same procedure. For explanation purposes, the measurement data group may be deleted only in step S67 in the flowchart of FIG. 6. However, the measurement data group may be deleted any time after the predetermined time period has elapsed.

The user equipment terminal to transmit the report signal including the measurement data group may be in the active mode or the idle mode. From the viewpoint of grasping the radio wave propagation status in the cell in detail as much as possible, it may be preferable that the measurement data groups can be widely obtained from as many of the user equipment terminals as possible regardless of whether the user equipment terminal is in the active mode or the idle mode. In this case, it is preferable that the event parameter be widely broadcasted through the broadcast channel (BCH) information. On the other hand, from the viewpoint of obtaining more accurate movement information of the user equipment terminal or obtaining the measurement data groups immediately after the measurement thereof, it may be preferable to collect the measurement data groups from only the user equipment terminals in the active mode. On the other hand, when it is required to collect data from an area where the user equipment terminal can be brought into but a call can be neither transmitted nor received (such as in a hospital, public transportation and the like), it may be preferable to collect the measurement data groups from only the user equipment terminals in the idle mode. Further, it may be preferable to collect the measurement data groups from only the user equipment terminals capable of measuring the positional coordinates thereof. This may be preferable from the viewpoint of analyzing data by distinguishing important measurement points such as a boundary area between cells, in the vicinity of the base station, near a large building and the like from the other points.

### Embodiment 3

Form time to time, the user equipment terminal may be moved into a non-service area due to the movement of the user regardless of whether the user equipment is in the active mode or in the idle mode. As is described above step S64 of FIG. 6, the measurement data group having been measured while the user equipment terminal had been in a service area has been stored in the memory. Therefore, when the user equipment terminal is moved out of the non-service area into a service area again, it is preferable that the measurement data group not having been reported be reported. This is because the data in the vicinity of the boundary between a serving area and a non-serving area are important for the cell design process and the optimization process of the radio parameters. Herein, the non-service area refers to an area where the intensity of radio waves is so reduced (weak) that no cell can be selected (detected) in the cell search.

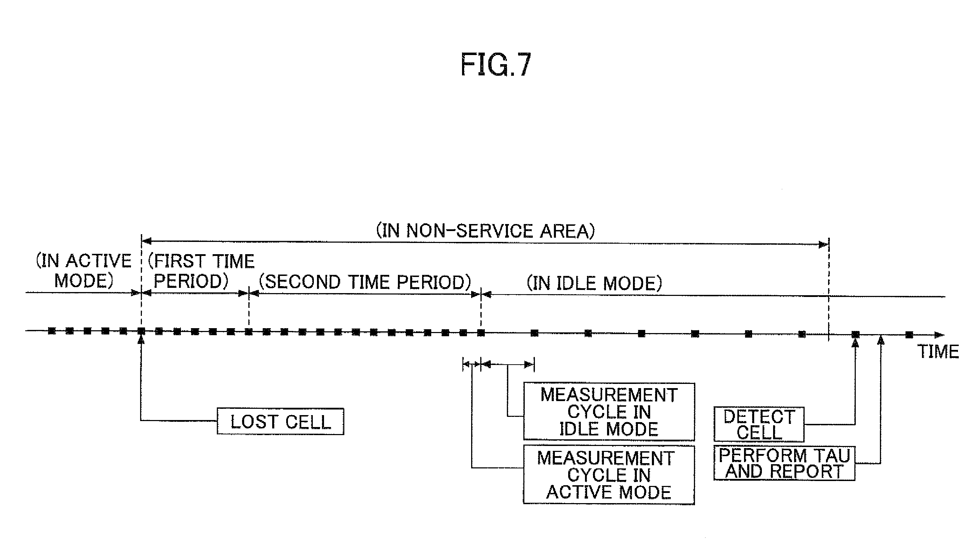

FIG. 7 schematically illustrates a case where the user equipment terminal reports the measurement data group after being moved in a service area again. In this case, as shown in the left-hand side of FIG. 7, first, the user equipment terminal had been in the active mode and in communication. After that, the user equipment terminal had been moved into a noun-service area (where radio waves cannot propagate such as in a tunnel, in a building or the like). In this case, from an objective viewpoint, the user equipment terminal is actually in the non-service area. However, the user equipment terminal might not be able to immediately recognize that the user equipment terminal is actually in the non-service area. As a matter of fact, in this case, the user equipment terminal performed the cell search every 200 ms, but could not find any cell to be connected to because of being in the non-service area. During a first time period (1 second in this case) since during the first cell search no cell is detected, the user equipment terminal attempts to reconnect to the cell to which the user equipment terminal has been connected lately. If the user equipment terminal can reconnect to the cell, the connection can be maintained, so that the user equipment terminal can transmit the measurement data group to the base station at any time. However, if the first time period has passed without being reconnected to the cell, for the next second time period (10 s in this case), the user equipment terminal attempts to connect to any of the cells including the cells to which the user equipment terminal has ever been connected to before. If the user equipment terminal can reconnect to any cell, the connection can be maintained, so that the user equipment terminal can transmit the measurement data group to the base station any time. However, if the second time period has passed without being reconnected to any of the cells, the user equipment terminal goes into the idle mode. As a result, the number of measurement times such as the cell search performed per unit time by the user equipment terminal is reduced to as low as once every 1000 ms. Next, as shown in the right-hand side of FIG. 7, the user equipment terminal has been moved out of the non-service area and back into a service area and detects a cell. Through the detected cell, the user equipment terminal receives the broadcast channel (BCH) information and detects the current tracking area (TA). Then, the user equipment terminal determines whether the detected tracking area is the same as the last tracking area where the user equipment terminal belonged lately. When determining that the detected tracking area is different from the latest tracking area, the user equipment terminal transmits a signal to request to update the tracking area (TAU) to the base station of the serving cell. In this case, along with the transmission of the TAU, the measurement data group that had been measured before the user equipment terminal moved into the non-servicing area and that has not yet been transmitted is also transmitted to the base station. The measurement data group having been transmitted to the base station may be further transmitted to the base station that actually requires the measurement data group through an interface such as the network interface 14 (see FIG. 1) between the base stations (the interface may be referred to as an "X2 interface"). On the other hand, when determining that the detected tracking area is the same as the latest tracking area, the signal to request to update the tracking area (TAU) may not be transmitted to the base station of the serving cell as soon as the determination is made. In such a case, the user equipment terminal waits to report the measurement data group until the next timing such as when another signal to request to update the tracking area (TAU) is transmitted, when a call is originated from the user equipment terminal, when the user equipment terminal responds to a receive call or the like. Further, it may be preferable to determine that the user equipment terminal should always transmit a signal to request to update the tracking area (TAU) whenever the user equipment terminal moves out of the non-service area and moves into the service area regardless of whether the detected tracking area is the same as the previous tracking area. This setting may be preferable because, for example, the measurement data group not having been reported can be reported as soon as the user equipment terminal moves out of the non-serving area and moves into the serving area.

### Embodiment 4

A demand for adjusting the radio parameters may be applied to not only the new base station to be installed but also the already-installed base station. As an example, a case is assumed where the incompletion rate is increased (degraded) in an already-installed base station. The incompletion rate herein refers to an amount (rate) indicating that the call is forcibly terminated regardless of the user's intention. Such a phenomenon as to forcibly terminate the call may result from a handover failure or a connection failure, and/or a degradation of radio link quality or the like. In such a case, it is expected to improve the incompletion rate to some extent by changing the radio parameters such as the transmission power value and the like.

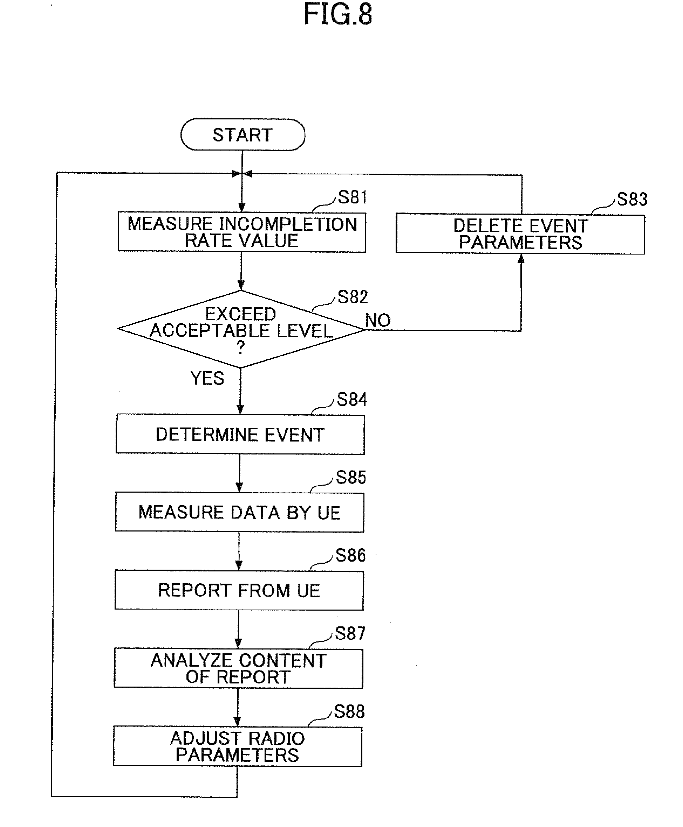

FIG. 8 is a flowchart showing a process for improving an incompletion rate. In step S81, the incompletion rate is measured at an already-installed base station. For example, the incompletion rate may be measured by the monitoring section 16 of FIG. 1.

In step S82, it is determined whether the incompletion rate is degraded so that the incompletion rate exceeds a predetermined acceptable level. When determining that the incompletion rate is degraded so that the incompletion rate exceeds a predetermined acceptable level, the process goes to step S84. This determination is performed by the determination section 17 of FIG. 1.

In step S84, the event is determined that is to collect the measurement data group from user equipment terminals in the serving cell of the already-installed base station. The content of the event is the same as that described above step S32 in FIG. 3. In the case of FIG. 3, the new base station to be installed is selected as the base station of the specific cell in the content of the event. However, in the content of the event determined in step S84 of FIG. 8, the already-installed base station suffering a high incompletion rate is selected as the base station of the specific cell. The event parameters specifying the content of the event are reported to the user equipment terminals. In this case, the event parameters may be broadcasted to all the user equipment terminals across the cell or may be reported to the user equipment terminals in a specific area of the cell. This is because the phenomenon of degrading the incompletion rate may occur in the entire cell or in a specific area of the cell.

In step S85, each user equipment terminal measures various data such as the received quality value of the downlink reference signal from the base station of the specific cell, the position of the user equipment terminal, time data and the like in accordance with the content of the event parameter. Then the measurement data groups with respect to each event are collectively provided (measured).

In step S86, the report signal including the measurement data group is transmitted from each user equipment terminal to the already-installed base station to be adjusted.

In step S87, the measurement data groups collected from each of the user equipment terminals are analyzed. In accordance with the result of the analysis, the radio parameters of the already-installed base station to be adjusted are adjusted, so that the parameters such as the transmission power value, transmission format (such as modulation method) and the like may be adequately adjusted.

After that, the process goes back to step S81 and the incompletion rate is measured again. Then, in step S82, it is determined whether the incompletion rate is degraded so that the incompletion rate exceeds a predetermined acceptable level. When determining that the incompletion rate is sufficiently improved due to the adjustment of the radio parameters in step S88, the process goes to step S83, and the event parameters specifying the content of the event are deleted but the monitoring of the incompletion rate is continued. On the other hand, in step S82, when determining that the improvement of the incompletion rate is not enough, the process goes to step S84 to repeat the processes described above to further adjust the radio parameters. By repeating the same processes as described above, it may become possible to obtain adequate radio parameters.

The present invention is described above by referring to specific embodiments. However, a person skilled in the art may understand that the above embodiments are described for illustrative purpose only and may think of examples of various modifications, transformations, alterations, changes, and the like. To promote an understanding of the present invention, the specific values are used as examples throughout the description. However, it should be noted that such specific values are just sample values unless otherwise described, and any other values may be used. For illustrative purposes, the apparatus according to an embodiment of the present invention is described with reference to the functional block diagram. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority from Japanese Patent Application No. 2007-001865 filed on January 9, 2007, the entire contents of which are hereby incorporated herein by reference.

## Claims

1. A base station apparatus to be used in a mobile communication system, the base station apparatus comprising:
a report signal receiving unit configured to receive a report signal from one or more user equipment terminals;
a radio parameter adjustment unit configured to adjust radio parameters based on an analysis result of each report signal;
a designation unit configured to designate a report condition to be used for each of the user equipment terminals to determine whether to transmit the report signal and content to be reported in the report signal; and
a report unit configured to signal the report condition and the content to be reported to the one or more user equipment terminals, wherein
the report condition is satisfied when a transmission source of a downlink reference signal is a specific cell, and
the content to be reported includes a received quality value of the downlink reference signal.

2. The base station apparatus according to claim 1, wherein
the specific cell is a cell designated by the base station apparatus.

3. The base station apparatus according to claim 1, wherein
the report condition is satisfied when a relationship between the received quality value of the downlink reference signal and at least one of plural threshold values changes.

4. The base station apparatus according to claim 1, wherein
the report condition is satisfied whenever the received quality value of the downlink reference signal changes more than a predetermined value.

5. The base station apparatus according to claim 1, wherein
the report signal is received at a predetermined cycle.

6. The base station apparatus according to claim 1, wherein
the report condition is satisfied when a positional relationship between the base station apparatus and the user equipment terminal reaches a predetermined positional relationship.

7. The base station apparatus according to claim 1, wherein
the received quality value is expressed by an absolute value or a relative value.

8. The base station apparatus according to claim 1, wherein
one or both of the report condition and the content to be reported are reported as broadcast channel information or reported as dedicated control information to a specific user equipment terminal.

9. The base station apparatus according to claim 1, wherein
the report condition is satisfied when a traffic flow is not congested so that a traffic congestion level is not higher than a predetermined level.

10. The base station apparatus according to claim 1, wherein
the specific cell is a neighbour cell adjacent to a cell of the base station apparatus.

11. The base station apparatus according to claim 1, wherein
the specific cell is designated by using cell identification information or a scramble code.

12. The base station apparatus according to claim 1, wherein
the received quality value is expressed by a measured received signal level, received signal to interference noise ratio value, or a path loss value.

13. The base station apparatus according to claim 1, wherein
the report signal is transmitted from each of the user equipment terminals when a tracking area is updated, when a call is originated from the user equipment terminal, and when the user equipment terminal responds to a terminating call.

14. The base station apparatus according to claim 13, wherein
the report condition is also satisfied when a cell is detected during a cell search and when a cell has not been detected for a predetermined time period during the cell search.

15. The base station apparatus according to claim 13, wherein
the report signal received from a user equipment terminal having been moved out of a non-service area and into a serving area includes data having been prepared before the user equipment terminal had been moved out of a service area and not having been reported yet.

16. The base station apparatus according to claim 15, wherein
the report signal further includes positional data or time data when the user equipment terminal has moved into the service area or the non-service area.

17. The base station apparatus according to claim 1, wherein
when a forced termination rate of calls is degraded more than a predetermined level, the base station apparatus requests the one or more user equipment terminals to transmit the report signal.

18. The base station apparatus according to claim 17, wherein
the forced termination rate of calls derives from a number of handover failures, a number of connection failures, or a number of failures due to the degradation of a radio link.

19. A user equipment terminal to be used in a mobile communication system, the user equipment terminal comprising:
a received quality measurement unit configured to measure a received quality value of a downlink reference signal;
a determination unit configured to determine whether a report condition designated by a base station apparatus is satisfied; and
a report signal generation unit configured to, when determining that the report condition is satisfied, generate a report signal including content to be reported designated by the base station apparatus, wherein
the report condition is satisfied when a transmission source of the downlink reference signal is a specific cell, and
the content to be reported includes the received quality value of the downlink reference signal.

20. The user equipment terminal according to claim 19, wherein
the specific cell is a cell designated by the base station apparatus.

21. The user equipment terminal according to claim 19, wherein
the report condition is satisfied when a relationship between the received quality value of the downlink reference signal and at least one of plural threshold values changes.

22. The user equipment terminal according to claim 19, wherein
the report condition is satisfied whenever the received quality value of the downlink reference signal changes more than a predetermined value.

23. The user equipment terminal according to claim 19, wherein
the report signal is received at a predetermined cycle.

24. The user equipment terminal according to claim 19, wherein
the report condition is satisfied when a positional relationship between the base station apparatus and the user equipment terminal reaches a predetermined positional relationship.

25. The user equipment terminal according to claim 19, wherein
the received quality value is expressed by an absolute value or a relative value.

26. The user equipment terminal according to claim 19, wherein
one or both of the report condition and the content to be reported are reported as broadcast channel information or reported as dedicated control information to a specific user equipment terminal.

27. The user equipment terminal according to claim 19, wherein
the report signal is requested when a traffic flow is not congested so that a traffic congestion level is not higher than a predetermined level.

28. The user equipment terminal according to claim 19, wherein
the specific cell is a neighbour cell adjacent to a cell of the base station apparatus.

29. The user equipment terminal according to claim 19, wherein
the specific cell is designated by using cell identification information or a scramble code.

30. The user equipment terminal according to claim 19, wherein
the received quality value is expressed by a measured received signal level, received signal to interference noise ratio value, or a path loss value.

31. The user equipment terminal according to claim 19, wherein
the report signal is transmitted from the user equipment terminal when a tracking area is updated, when a call is originated from the user equipment terminal, and when the user equipment terminal responds to a terminating call.

32. The user equipment terminal according to claim 31, wherein
the report condition is also satisfied when a cell is detected during a cell search and when a cell has not been detected for a predetermined time period during the cell search.

33. The user equipment terminal according to claim 31, wherein
the report signal received from a user equipment terminal having been moved out of a non-service area and into a serving area includes data having been prepared before the user equipment terminal had been moved out of a service area and not having been reported yet.

34. The user equipment terminal according to claim 33, wherein
the report signal further includes positional data or time data when the user equipment terminal has moved into the service area or the non-service area.

35. The user equipment terminal according to claim 19, wherein
when a forced termination rate of calls of the base station apparatus is degraded more than a predetermined level, the report signal is requested.

36. The user equipment terminal according to claim 35, wherein
the forced termination rate of calls derives from a number of handover failures, a number of connection failures, or a number of failures due to the degradation of a radio link.

37. A method to be used in a base station apparatus of a mobile communication system, the method comprising:
a report signal receiving step of receiving a report signal from one or more user equipment terminals;
a radio parameter adjusting step of adjusting radio parameters based on an analysis result of each of the report signals;
a designating step of designating a report condition to be used for each of the user equipment terminals to determine whether to transmit the report signal and content to be reported in the report signal; and
a reporting step of reporting the report condition and the content to be reported to the one or more user equipment terminals, wherein
the report condition is satisfied when a transmission source of a downlink reference signal is a specific cell, and
the content to be reported includes a received quality value of the downlink reference signal.

38. A method to be used in a user equipment terminal of a mobile communication system, the method comprising:
a received quality measuring step of measuring a received quality value of a downlink reference signal;
a determining step of determining whether a report condition designated by a base station apparatus is satisfied; and
a report signal generating step of, when determining that the report condition is satisfied, generating a report signal including content to be reported designated by the base station apparatus, wherein
the report condition is satisfied when a transmission source of the downlink reference signal is a specific cell, and
the content to be reported includes a received quality value of the downlink reference signal.
